# EUROPEAN PATENT SPECIFICATION

(11) **EP 0 920 895 B1**
(45) Date of publication and mention of the grant of the patent: **08.06.2005**
(21) Application number: 98204058.6
(22) Date of filing: 01.12.1998
(51) Int. Cl.: B01D 19/00

(54) **Device and method for degassing water and separating a steam/water mixture into steam and water**
Vorrichtung und Verfahren zur Entgasung von Wasser und Trenung von einer Dampf/Wasser Mischung in Dampf und Wasser
Dispositif et procédé de dégazage d'eau et séparation d'un mélange vapeur/eau en vapeur et eau

(30) Priority: 03.12.1997 NL 1007681
(43) Date of publication of application: 09.06.1999
(73) Proprietor: Stork Thermeq B.V., 7553 JD Hengelo (NL)
(72) Inventor: ter Maat, Albert Jan, 7462 VA Rijssen (NL)
(74) Representative: Iemenschot, Johannes Andreas, Ir.

(56) References cited:
- NL-A- 7 203 333
- NL-A- 7 700 320

## Description

The invention relates to a device for degassing water and separating a steam/water mixture into steam and water.

Numerous embodiments of devices for degassing water are known. A device for degassing water which is known from Dutch patent specification 145516 comprises a horizontal vessel, with one or more sprayers which are arranged in the top of the vessel and are provided with a connection for the pressurized feed of the water which is to be degassed, one or more outlets for gases which have been separated off, the said outlets being arranged on the top side of the vessel, a manifold which is arranged in the vessel and has a feed connection for steam and which opens out into the vessel in the vicinity of the underside of the vessel, and an outlet for degassed water which is arranged on the underside of the vessel. During use, a large part of the vessel is filled with water. The water which is to be degassed is sprayed into the vessel, via the sprayer or sprayers, in a screen of fine droplets. Via the manifold steam is passed through the water which is present in the vessel, with the result that the water is heated and any gases which are still present in the water are released. Some of the steam and the gases emanating from the water which is present in the vessel and the water sprayed by the sprayer or sprayers are discharged via outlets which are arranged in the vicinity of the sprayers. The degassed water is drained off on the underside of the vessel.

Separating devices for separating water and steam are also known and comprise at least one inlet for a steam/water mixture which is to be separated, a water outlet which is arranged in the vicinity of the underside, and a steam outlet which is arranged on the top side. During operation, a steam/water mixture which is fed in via the inlet and emanates, for example, from an evaporator is fed to the separating device, which is, for example, in the form of a vertical vessel. The water collects in the bottom of the device and the steam collects in the top of the device. The water is discharged at the underside via the water outlet and the steam is discharged at the top side via the steam outlet.

Finally, combined devices for degassing water and separating a steam/water mixture into steam and water are known. A specific embodiment of a device of this nature comprises a vessel with a manifold which has a feed connection for steam, a water discharge which is arranged on the underside of the vessel, and an outlet for vapour/steam which is arranged in the vicinity of the top side. A unit with a sprayer which is provided with a connection for the feed of water which is to be degassed is mounted on the top of the vessel. This unit is in open communication with the interior of the vessel. During operation, a steam/water mixture which is to be separated is supplied via the feed connection and is passed through the water which is present in the vessel via the manifold. At the same time, water which is to be degassed is sprayed in via the sprayer. The steam which is passed through the water is discharged, together with the gases emanating from the water, via the outlet.

This latter combined device has a number of drawbacks. The vessel, which is pressurized during operation, is weakened by the attachment of the degassing unit. Inspection authorities impose higher standards for a vessel of this nature than for a cylindrical vessel. Furthermore, gases emanating from the water are also present in the discharged steam, which is used as process steam. These gases may have an adverse effect on the installation in which the steam is used.

The object of the invention is to provide a combined device for degassing water and separating a steam/water mixture into steam and water which has the advantages of the separate devices for degassing water and separating a steam/water mixture but does not have the drawbacks of the known combined device.

This object is achieved by means of a device according to claim 1.

The device according to the invention makes it possible to achieve a saving on costs by comparison with separate devices for degassing water and separating a steam/water mixture. Furthermore, this device makes it possible to pass some of the steam emanating from the separating device through the water and to discharge the rest of the steam as clean process steam.

Particularly advantageously, the separating device is accommodated in the vessel. The combined device then comprises only one vessel, making it less expensive than the known vessel with attached degassing unit or two separate vessels of a separating device and a degassing device.

Practical embodiments of the device according to the invention are specified in claims 3 to 9.

The invention also relates to a method for degassing water and separating steam and water in a steam/water mixture according to claim 10.

The invention will be explained in more detail in the following description of a number of exemplary embodiments of the device according to the invention, with reference to the drawing, in which:
Fig. 1 diagrammatically depicts a first embodiment of the device according to the invention with a degassing vessel and separating vessel,
Fig. 2 shows a second embodiment of the device according to the invention with a separating device which is arranged in one end of the degassing vessel, and
Figs. 3 and 4 show a third and a fourth embodiment of the device according to the invention, with a separating device arranged in the centre of the degassing vessel.

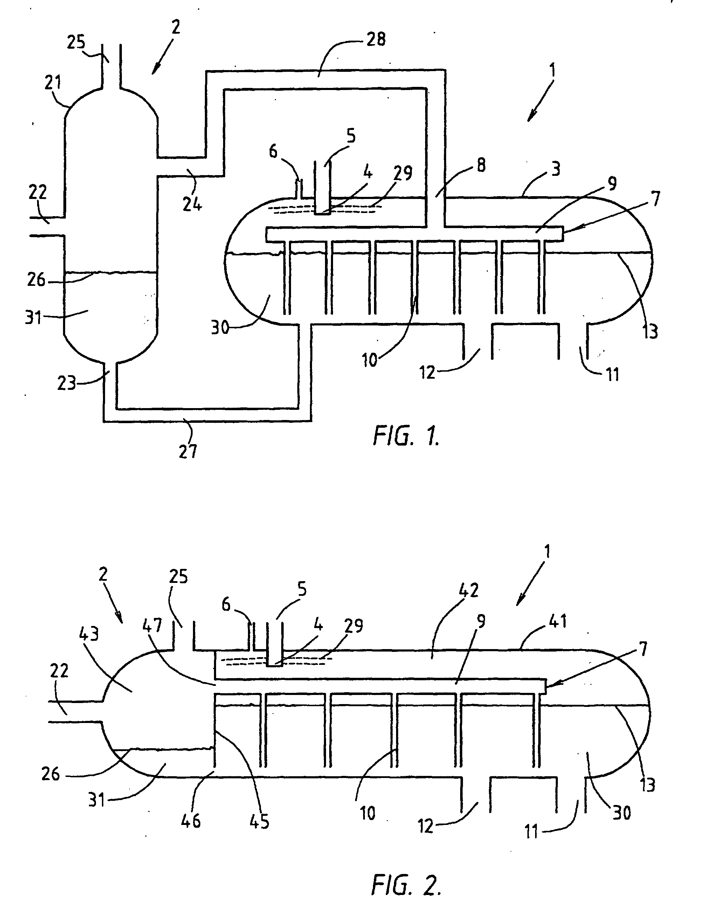

The device which is diagrammatically depicted in Fig. 1 for degassing water and separating a steam/water mixture into steam and water comprises a degassing device 1 and a separating device 2. The degassing device comprises a horizontal, substantially cylindrical vessel 3. A sprayer 4 which is provided with a connection 5 for the pressurized feed of water which is to be degassed is arranged in the top of the vessel 3, as is an outlet 6 for gases which have been separated off. A manifold 7 which has a feed connection 8 for steam is arranged in the vessel 3. The manifold comprises a distribution pipe 9 with pipes 10 which extend downwards and open out in the vicinity of the underside of the vessel 3. The vessel 3 is furthermore provided, on the underside, with one or more outlets 11, 12 for water which has been degassed. The water level in the vessel 3 is indicated by 13.

The separating device 2 for separating a steam/water mixture into steam and water comprises a vertical, substantially cylindrical vessel 21. The vessel 21 is provided with an inlet 22 for a steam/water mixture which is to be separated, which inlet is arranged approximately half-way up vessel 21. On the underside, the vessel 21 is provided with a water outlet 23. The vessel 21 has two steam outlets, namely a first steam outlet 24 which is arranged in the top part of the vessel 21 and a second steam outlet 25 which is arranged on the top side of the vessel. The water level in the vessel 21 is indicated by 26. Via a line 27, the water outlet 23 is in communication with the underside of the degassing vessel 3. Via a line 28, the first steam outlet 24 is connected to the feed connection 8 of the manifold 7.

The device illustrated in Fig. 1 often forms part of a steam boiler. During operation, untreated feed water is supplied under pressure, via the connection 5, and is sprayed into the interior of the vessel 3 by the sprayer 4 as a screen of water droplets 29 and, in the process, is heated by the steam which is present in the vessel 3 above the water. Gases which are dissolved in the untreated feed water will, during the process, diffuse out of the droplets and will collect in the top part of the vessel 3. At the same time, steam emanating from the separating vessel 21 is passed, via the line 28, the feed connection 8 and the manifold 7, through the water 30 which is present in the vessel 3. The steam will release any gases which are still dissolved in the water 30 and will entrain these gases towards the top part of the vessel 3. The steam which is passed through the water 30 largely condenses onto the water droplets 29 which have been sprayed into the vessel 3. The remaining steam and the gases which are situated in the top part of the vessel 3 are discharged via the outlet 6. The degassed water is discharged via the outlets 11 and 12, it being possible for the outlet 11 to serve as a boiler feed water outlet and the outlet 12 to serve as a recirculated water outlet.

In the separating device 2, a steam/water mixture which is supplied via the inlet 22 and emanates, for example, from the boiler is separated into water 31 which collects in the bottom of the vessel 21 and steam which collects in the top of the vessel 21. The water 31 is passed, via the line 27, to the vessel 3, where it mixes with the water 30. Some of the steam in the vessel 21 is passed, via the first steam outlet 24 and the line 28, to the manifold 7. The rest of the steam is discharged, via the outlet 25, as clean process steam.

In the process described above, the steam formed in the separating device 2 is therefore divided into two part-streams which each proceed to fulfil an independent function. The steam which is discharged via the steam outlet 25 is used as process steam and the steam which is discharged via the steam outlet 24 fulfils a function in the degassing device and does not come into further contact with the process steam which is discharged via the steam outlet 25 and therefore also does not become contaminated with gases emanating from the feed water.

Fig. 2 shows an embodiment of the device according to the invention in which the degassing device 1 and the separating device 2 are integrated in a single horizontal, substantially cylindrical vessel 41. In Fig. 2, parts which correspond to parts shown in Fig. 1 are denoted by the same reference numerals as those used in Fig. 1.

The vessel 41 has a degassing part 42 and a separating part 43. These two parts are separated from one another by means of a vertical, substantially planar partition 45. The partition 45 is provided on its underside with an opening 46 in order to provide the connection between the bottom section of the separating part 43 and the bottom section of the degassing part 42. An opening 47, to which the manifold 7 is connected, is arranged in the top part of the partition 45.

In the embodiment shown in Fig. 2, the opening 46 fulfils the same function as the water outlet 23 with the line 27 connected thereto as shown in the embodiment illustrated in Fig. 1. The opening 47 of the embodiment shown in Fig. 2 fulfils the function of the steam outlet 24, the line 28 which is connected thereto and the feed connection 8 of the embodiment illustrated in Fig. 1.

The integrated embodiment shown in Fig. 2 has the advantage that the combined device is accommodated in a single cylindrical vessel 41. As a result, the combined device can be made more compact and less expensive than the device illustrated in Fig. 1.

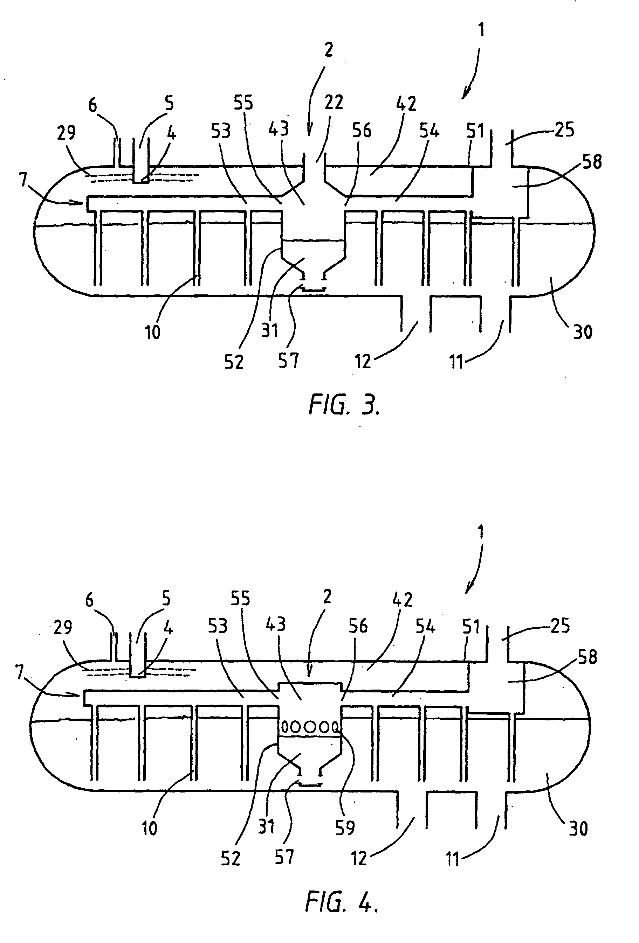

Figs. 3 and 4 show two embodiments of the device according to the invention in which the separating device is arranged in the centre of a degassing vessel 51.

In Figs. 3 and 4, parts which correspond to parts shown in Figs. 1 and 2 are denoted by the same reference numerals as those used in Figs. 1 and 2.

In Figs. 3 and 4, the separating part 43 is separated from the degassing part 42 by means of a substantially cylindrical wall 52. The manifold 7 comprises two parts 53 and 54 which are connected to openings 55 and 56 which are arranged diametrically opposite one another in the top part of the wall 52. On the underside, the separating part is provided with openings 57 for providing the connection between the bottom section of the separating part 43 and the bottom section of the degassing part 42 of the vessel 51.

The steam outlet 25 for the process steam is arranged on the top side of the vessel 51, in the vicinity of that end of the part 54 of the manifold 7 which is remote from the separating part 43 and is in communication with said end via a chamber 58.

The difference between the embodiments shown in Figs. 3 and 4 is that, in the embodiment shown in Fig. 3, the inlet for the steam/water mixture is arranged on the top side of the separating part 43, centrally with respect to the cylindrical partition 52, and in the embodiment shown in Fig. 4 the inlet for the steam/water mixture is formed by a plurality of openings 59 which are arranged in the cylindrical partition 52, distributed over the circumference of the latter.

In the embodiments shown in Figs. 3 and 4 too, the steam which has been separated off in the separating part 43 is divided into two streams, namely a stream which, via the pipes 10, is passed into the water 30 which is present in the vessel 51 and is discharged, via the outlet 6, together with the gases from the water, and a stream which, via the steam outlet 25, is discharged as a stream of clean process steam.

## Claims

1. Device for degassing water, comprising a vessel (3;41;51) with at least one sprayer (4) which is arranged in the top of the vessel and is provided with a connection (5) for the pressurized feed of water which is to be degassed, at least one outlet (6), which is arranged on the top side of the vessel, for gases which have been separated off, a manifold (7) which is arranged in the vessel and has a feed connection (8;47;55,56) for steam and which opens out into the vessel in the vicinity of the underside of the vessel, and at least one outlet (11,12) for degassed water which is arranged on the underside of the vessel, **characterized in that** the device is provided with a separating device (2) for separating a steam/water mixture into water and steam, having at least one inlet (22;59) for a steam/water mixture which is to be separated, a water outlet (23;46;57) which is arranged in the vicinity of the underside of the separating device (2) and is in communication with the underside of the vessel (3;41;51), at least one first steam outlet (24;47;55,56) which is arranged in the top part of the separating device (2) and is connected to the feed connection of the manifold (7), and a second steam outlet (25) for process steam.

2. Device according to claim 1, in which the separating device is accommodated in the vessel.

3. Device according to claim 2, in which the vessel is divided, by means of a substantially vertical partition (45;52), into a separating part (43), which forms the separating device, and a degassing part (42), the partition being provided, on the underside, with an opening (46;57) for connecting the bottom section of the separating part to the bottom section of the degassing part of the vessel, and the feed connection of the manifold is connected to an opening (47;55,56) which is arranged in the top part of the partition and serves as the first steam outlet of the separating device.

4. Device according to claim 3, in which the separating part (43) is formed by a part of the vessel (41;51) which is delimited by the wall of the vessel and the partition (45), the partition preferably being of substantially planar design.

5. Device according to claim 4, in which the second steam outlet (25) is arranged on the top side of the vessel (41), at the location of the separating part (43).

6. Device according to claim 3, in which the separating part (43) is arranged centrally in the vessel (51) and is delimited by the partition (52), which is preferably of substantially cylindrical design.

7. Device according to claim 6, in which the second steam outlet (25) is arranged on the top side of the vessel, at the location of that end of the manifold (7) which is remote from the feed connection (56), and is in communication with the manifold.

8. Device according to claim 6 or 7, in which the inlet (22) for the steam/water mixture which is to be separated is arranged on the top side of the vessel (51), centrally with respect to the cylindrical partition (52).

9. Device according to claim 6 or 7, in which the inlet for the steam/water mixture which is to be separated is formed by a plurality of openings (59) which are arranged in the cylindrical partition (52), distributed along the circumference of the latter.

10. Method for degassing water and separating steam and water from a steam/water mixture using the device of one of the preceding claims, in which method the water which is to be degassed is sprayed, by means of a sprayer (4), as droplets (29) into a substantially closed vessel (3;41;51) which is partially filled with at least partially degassed water (30), steam is passed through this water, the steam is discharged from the vessel together with gases which have been released from the water through which the steam is passed and with gases which have been released from the water sprayed by the sprayer (4), and the degassed water is drained off, and in which method the steam/water mixture is separated, in a separating device (2), into steam and water, the water which has been separated off is added to the degassed water, some of the steam which has been separated off is used by being passed through the water which is present in the vessel, and the rest of the steam which has been separated off is used as process steam.

## Patentansprüche

1. Vorrichtung zur Entgasung von Wasser, die einen Behälter (3; 41; 51) mit zumindest einem Zerstäuber (4), welcher in dem Behälter oben angeordnet und mit einer Verbindung (5) für unter Druck erfolgende Zufuhr von Wasser, das entgast werden soll, versehen ist, mit zumindest einem Auslass (6), der an der Oberseite des Behälters für Gase angeordnet ist, die abgesondert wurden, mit einem Verteilerrohrsystem (7), das im Behälter angeordnet ist, eine Zufuhrverbindung (8; 47; 55, 56) für Dampf aufweist und sich in den Behälter hinein in der Nähe der Unterseite des Behälters öffnet, und mit zumindest einem Auslass (11, 12) für entgastes Wasser, der an der Unterseite des Behälters angeordnet ist, **dadurch gekennzeichnet, dass** die Vorrichtung mit einer Trennvorrichtung (2) zur Trennung einer Dampf/Wasser Mischung in Wasser und in Dampf versehen ist, die zumindest einen Einlass (22; 59) für eine Dampf/Wasser Mischung, die getrennt werden soll, einen Wasserauslass (23; 46; 57), der in der Nähe der Unterseite der Trennvorrichtung (2) angeordnet und mit der Unterseite des Behälters (3; 41; 51) in Verbindung ist, zumindest einen ersten Dampfauslass (24; 57; 56, 55), der im oberen Teil der Trennvorrichtung (2) angeordnet und mit der Zufuhrverbindung des Verteilerrohrsystemes (7) in Verbindung ist, sowie einen zweiten Dampfauslass (25) für Prozessdampf aufweist.

2. Vorrichtung nach Anspruch 1, bei der die Trennvorrichtung in dem Behälter untergebracht ist.

3. Vorrichtung nach Anspruch 2, bei der der Behälter mittels einer im wesentlichen vertikalen Trennwand (45; 52) in einen Trennteil (43), der die Trennvorrichtung bildet, und einen Entgasungsteil (42) unterteilt ist, wobei die Trennwand an der Unterseite mit einer Öffnung (46; 57) versehen ist, um den Bodenabschnitt des Trennteiles mit dem Bodenabschnitt des Entgasungsteiles des Behälters zu verbinden, und die Zufuhrverbindung des Verteilerrohrsystemes mit einer Öffnung (47; 55, 56) verbunden ist, die im oberen Teil der Trennwand angeordnet ist und als der erste Dampfauslass der Trennvorrichtung dient.

4. Vorrichtung nach Anspruch 3, bei der der Trennteil (43) durch einen Teil des Behälters (41; 51) gebildet ist, der durch die Wand des Behälters und die Trennwand (45) begrenzt ist, wobei die Trennwand vorzugsweise von im wesentlichen ebener Gestalt ist.

5. Vorrichtung nach Anspruch 4, bei der der zweite Dampfauslass (25) an der Oberseite des Behälters (41) am Ort des Trennteiles (43) angeordnet ist.

6. Vorrichtung nach Anspruch 3, bei der der Trennteil (43) im Behälter (51) zentral angeordnet und durch die Trennwand (52) begrenzt ist, die vorzugsweise von im wesentlichen zylindrischer Gestalt ist.

7. Vorrichtung nach Anspruch 6, bei der der zweite Dampfauslass (25) an der Oberseite des Behälters an der Stelle desjenigen Endes des Verteilerrohrsystemes (7), welches von der Zufuhrverbindung (56) fern gelegen ist, angeordnet und mit dem Verteilerrohrsystem in Verbindung ist.

8. Vorrichtung nach Anspruch 6 oder 7, bei der der Einlass (22) für die Dampf/Wasser Mischung, die getrennt werden soll, an der Oberseite des Behälters (51), bezüglich der Trennwand (52) zentral, angeordnet ist.

9. Vorrichtung nach Anspruch 6 oder 7, bei der der Einlass für die Dampf/Wasser Mischung, die getrennt werden soll, durch eine Mehrzahl von Öffnungen (59) gebildet ist, die in der zylindrischen Trennwand (52) entlang des Umfanges letzterer verteilt angeordnet sind.

10. Verfahren zur Entgasung von Wasser und Trennung von Dampf und Wasser aus einer Dampf/Wasser Mischung unter Verwendung der Vorrichtung gemäß einem der vorausgehenden Ansprüche, bei welchem Verfahren das Wasser, das entgast werden soll, mittels eines Zerstäubers (4) als Tröpfchen (29) in einen im wesentlichen geschlossenen Behälter (3; 41; 51) hinein gesprüht wird, der teilweise mit einem zumindest teilweise entgasten Wasser (30) gefüllt ist, Dampf durch dieses Wasser hindurch geführt wird, der Dampf aus dem Behälter zusammen mit Gasen ausgegeben wird, die von dem Wasser freigegeben wurden, durch das der Dampf geführt wird, und mit Gasen, die von dem Wasser freigegeben worden sind, das durch den Zerstäuber (4) versprüht wird, wobei das entgaste Wasser abgeführt wird und bei welchem Verfahren die Dampf/Wasser Mischung in einer Trennvorrichtung (2) in Dampf und Wasser getrennt wird, das Wasser, welches abgetrennt worden ist, dem entgasten Wasser hinzugeführt wird, ein Teil des Dampfes, der abgetrennt worden ist, verwendet wird, indem er durch das im Behälter befindliche Wasser hindurch geführt wird, und der Rest des Dampfes, der abgetrennt worden ist, als Prozessdampf verwendet wird.

## Revendications

1. Dispositif pour le dégazage de l'eau comprenant une cuve (3, 41, 51) avec au moins un pulvérisateur (4) qui est agencé au sommet de la cuve et qui est muni d'un raccord (5) pour l'alimentation sous pression de l'eau qui doit être dégazée, au moins une sortie (6) qui est agencée sur le côté supérieur de la cuve pour des gaz qui ont été séparés, un collecteur (7) qui est agencé dans la cuve et qui a une conduite d'alimentation (8, 47, 55, 56) pour la vapeur et qui s'ouvre dans la cuve à proximité de la partie inférieure de la cuve, et au moins une sortie (11, 12) pour l'eau dégazée qui est agencée sur la partie inférieure de la cuve, **caractérisé en ce que** le dispositif est muni d'un dispositif de séparation (2) pour séparer un mélange vapeur/eau en eau et en vapeur, présentant au moins une entrée (22, 59) pour un mélange eau/vapeur qui doit être séparé, une sortie d'eau (23, 46, 57) qui est agencée à proximité de la partie inférieure du dispositif de séparation (2) et qui est en communication avec la partie inférieure de la cuve (3, 41, 51), au moins une première sortie de vapeur (24, 47, 55, 56) qui est agencée dans la partie supérieure du dispositif de séparation (2) raccordée à la conduite d'alimentation du collecteur (7) et une seconde sortie de vapeur (25) pour la vapeur traitée.

2. Dispositif selon la revendication 1, dans lequel le dispositif de séparation est agencé dans la cuve.

3. Dispositif selon la revendication 2, dans lequel la cuve est divisée au moyen d'une partition sensiblement verticale (45, 52) en une partie de séparation (43), qui forme le dispositif de séparation, et une partie de dégazage (42), la partition étant munie, sur la partie inférieure, d'une ouverture (46, 57) pour le raccordement de la section de base de la partie de séparation à la section de base de la partie de dégazage de la cuve, et la conduite d'alimentation du collecteur est raccordé à une ouverture (47, 55, 56) qui est agencée dans la partie supérieure de la partition et qui sert de première sortie de vapeur du dispositif de séparation.

4. Dispositif selon la revendication 3, dans lequel la partie de séparation (43) est formée par une partie de la cuve (41, 51) qui est délimitée par la paroi de la cuve et la partition (45), la partition étant de préférence de conception sensiblement plane.

5. Dispositif selon la revendication 4, dans lequel la seconde sortie de vapeur (25) est agencée sur la partie supérieure de la cuve (41) au niveau de la partie de séparation (43).

6. Dispositif selon la revendication 3, dans lequel la partie de séparation (43) est agencée de façon centrale dans la cuve (51) et délimitée par la partition (52), qui est de préférence de conception sensiblement cylindrique.

7. Dispositif selon la revendication 6, dans lequel la seconde sortie de vapeur (25) est agencée sur la partie supérieure de la cuve au niveau de cette extrémité du collecteur (7) qui est distant de la conduite d'alimentation (56) et qui est en communication avec la conduite.

8. Dispositif selon la revendication 6 ou 7, dans lequel l'entrée (22) pour le mélange vapeur/eau qui doit être séparé est agencée sur le côté supérieur de la cuve (51) de façon centrale par rapport à la partition cylindrique (52).

9. Dispositif selon la revendication 6 ou 7, dans lequel l'entrée du mélange eau/vapeur qui doit être séparé est formée par une pluralité d'ouvertures (59), qui sont agencées dans la partition cylindrique (52), réparties le long de la circonférence de cette dernière.

10. Procédé pour le dégazage de l'eau et la séparation de la vapeur et de l'eau d'un mélange eau/vapeur en utilisant le dispositif selon l'une quelconque des revendications précédentes, dans lequel l'eau qui doit être dégazée est pulvérisée au moyen d'un pulvérisateur (4) sous la forme de gouttelettes (29) dans une cuve sensiblement fermée (3, 41, 51) qui est partiellement remplie avec au moins de l'eau partiellement dégazée (30), la vapeur circule à travers l'eau, elle est déchargée de la cuve en même temps que les gaz qui ont été libérés de l'eau à travers laquelle la vapeur est passée et avec des gaz qui ont été libérés de l'eau pulvérisée par le pulvérisateur (4), et l'eau dégazée est drainée, et dans lequel le mélange vapeur/eau est séparé dans un dispositif de séparation (2) en vapeur et eau, l'eau qui a été séparée est ajoutée à l'eau de dégazage, une partie de la vapeur qui a été séparée est utilisée en la faisant circuler dans l'eau qui est présente dans la cuve et le reste de la vapeur qui a été séparée est utilisé comme vapeur du procédé.
